(19) Europäisches Patentamt
European Patent Office
Office européen des brevets

(11) **EP 1 704 422 B1**

(12) **FASCICULE DE BREVET EUROPEEN**

(45) Date de publication et mention
de la délivrance du brevet:
**07.08.2013 Bulletin 2013/32**

(51) Int Cl.:
***G01T 1/17*** *(2006.01)*

(21) Numéro de dépôt: **04816491.7**

(86) Numéro de dépôt international:
**PCT/FR2004/003406**

(22) Date de dépôt: **29.12.2004**

(87) Numéro de publication internationale:
**WO 2005/073757 (11.08.2005 Gazette 2005/32)**

(54) **SYSTEME DE DETECTION DE RAYONNEMENTS A COMPTAGE D'IMPULSIONS A DOUBLE REMISE A ZERO**

DETEKTIONSGERÄT ZUR STRAHLUNSMESSUNG DURCH ZÄHLUNG VON IMPULSEN MIT DOPPELTER RÜCKSETZSCHALTUNG

RADIATION DETECTING SYSTEM WITH DOUBLE RESETTING PULSE COUNT

(84) Etats contractants désignés:
**AT BE BG CH CY CZ DE DK EE ES FI FR GB GR HU IE IT LI LU MC NL PT RO SE SI SK TR**

(30) Priorité: **30.12.2003 FR 0351223**

(43) Date de publication de la demande:
**27.09.2006 Bulletin 2006/39**

(73) Titulaire: **Commissariat à l'Énergie Atomique et aux Énergies Alternatives**
**75015 Paris (FR)**

(72) Inventeurs:
• **AUDEBERT, Patrick**
**F-38760 Varces Allieres Et Risset (FR)**
• **ROSTAING, Jean-Pierre**
**F-38260 La Cote Saint Andre (FR)**

(74) Mandataire: **Ahner, Philippe et al**
**BREVALEX**
**95 rue d'Amsterdam**
**75378 Paris Cedex 8 (FR)**

(56) Documents cités:
**EP-A- 0 022 949     DE-A- 4 304 349**
**US-A- 4 034 222     US-A- 4 198 986**

• **PATENT ABSTRACTS OF JAPAN vol. 1996, no. 01, 31 janvier 1996 (1996-01-31) -& JP 07 239385 A (SHIMADZU CORP), 12 septembre 1995 (1995-09-12)**
• **Z.Y. CHANG AND W.M.C. SANSEN: "Low-noise wide-band amplifiers in bipolar and CMOS technologies" 1991, KLUWER ACADEMIC PUBLISHERS , XP008036864 cité dans la demande page 153, ligne 1 - ligne 20; figure 5.1**

EP 1 704 422 B1

**Description**

La présente invention concerne le domaine des dispositifs de mesure d'exposition à des rayonnements et s'applique de manière générale à la détection de tous types de rayonnement de nature corpusculaire ou ondulatoire, comme les rayonnements de particules et les rayonnements de photons, notamment les radiations de protons, de neutrons, d'électrons ou de positrons, les rayonnements $\alpha,\beta,\gamma$, les photons de rayons X, les photons de lumière visible et les photons en dehors du visible.

On connaît dans l'état de la technique des dispositifs de détection de rayonnement dont la structure est formée d'un ou plusieurs éléments détecteurs associés à une électronique de traitement et de comptage des impulsions générées par l'élément de détection lors d'un évènement de capture d'un photon ou d'une particule.

On connaît en particulier des dispositifs de mesure de rayonnements agencés selon une architecture matricielle qui comporte une entité de détection associée à une entité électronique de traitement/acquisition.

L'ensemble matriciel formé par l'entité de détection (communément appelée «circuit de détection») associé à l'entité électronique d'acquisition et de comptage, (communément appelé «circuit de lecture») constitue un « senseur ».

L'entité de détection peut être formé par un gaz, un scintillateur associé à un semi-conducteur, ou par des couches de matériau détecteur, qui absorbent les photons ou les particules et les transforment finalement en impulsions électriques (paquet de charges électroniques).

L'expression de « paquet de charges » désigne ici de manière générale, des paquets de charges positives ou négatives notamment des trous ou des électrons ou des paires positrons-électrons.

L'entité électronique est formée d'un agencement matriciel de circuits électroniques de traitement et d'acquisition ayant pour fonction d'effectuer un comptage des évènements de détection des photons ou des particules.

Les circuits électroniques matriciels peuvent être réalisés en technologie silicium, par exemple en filière Bipolaire, CMOS ou BiCMOS.

Les senseurs matriciels peuvent être décomposés en réseau de pixels, chaque pixel étant formé de l'association d'un détecteur élémentaire associé à une chaîne d'acquisition électronique correspondante.

L'invention s'adresse de manière générale aux dispositifs comportant des détecteurs discrets (voire un seul détecteur unitaire) associés à des chaînes d'acquisitions respectives, comme aux dispositifs comportant une entité formé d'un continuum de détecteurs élémentaires associé à un réseau de chaînes d'acquisition, comme par exemple les imageurs de rayons X à architecture matricielle.

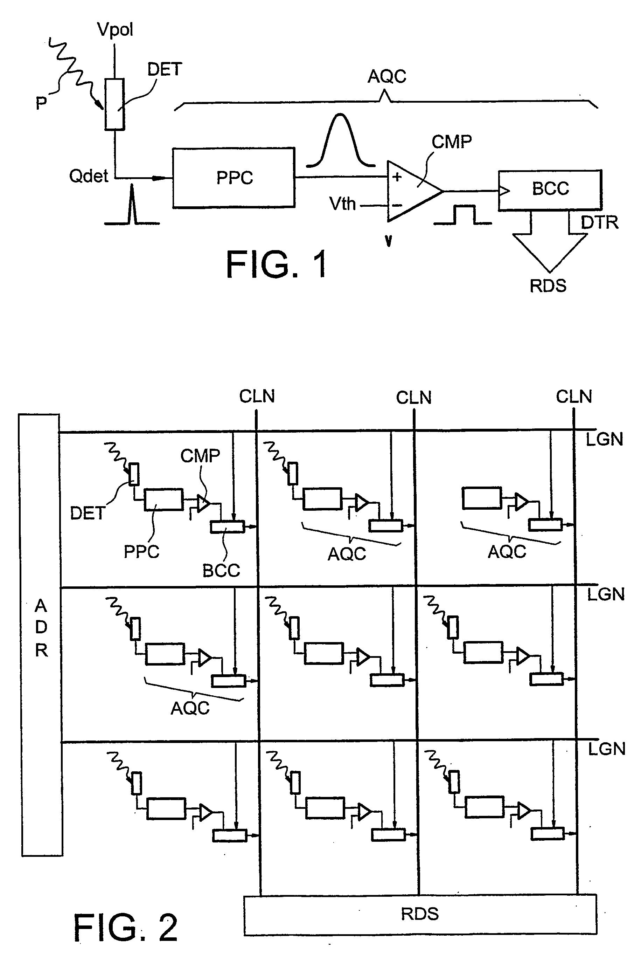

La figure 1 représente un schéma de principe de fonctionnement d'une chaîne d'acquisition d'un pixel selon l'état de la technique.

Pour chaque élément détecteur DET (ou groupe de détecteurs élémentaires), les impulsions électriques Qdet issues du détecteur sont traitées (converties, amplifiées, filtrées, mises en forme etc.) par un circuit de traitement PPC, puis présentées à un comparateur CMP qui délivre une impulsion calibrée pour chaque photon détecté. Ces impulsions incrémentent alors un compteur numérique BCC. A la fin de la période d'irradiation, le compteur BCC de chaque pixel contient donc le nombre de photons détectés par le pixel.

Comme schématisé sur la figure 2 qui représente une architecture matricielle basée sur la chaine d'acquisition de la figure 1, on procède ensuite à un transfert de données de comptage DTR vers un système de lecture RDS. La lecture des données peut s'effectuer ligne par ligne et colonne par colonne, par adressage matriciel ou par bus logique, à destination d'un système de calcul de l'imageur.

Afin de pouvoir compter des charges de quelques milliers d'électrons par pixel, la chaîne d'acquisition assure en particulier les fonctions suivantes :

- convertir des paquets de charges en tension,
- amplifier le signal,
- franchir un seuil,
- incrémenter un compteur, et,
- transférer les données numériques vers un système de lecture ou d'imagerie.

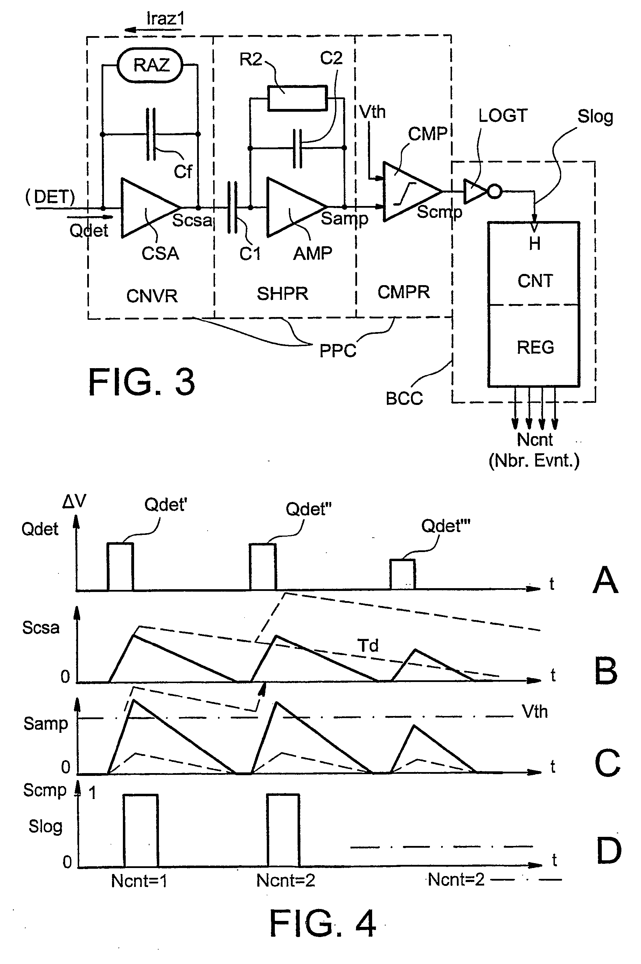

La figure 3 représente un schéma de réalisation électronique d'une chaîne d'acquisition d'un pixel avec une partie analogique PPC et une partie logique BCC, selon l'état de la technique.

La partie analogique PPC a une structure à trois étages fonctionnels connue dans la littérature anglaise sous l'appellation de « Charge Sensitive Amplifier/Shaper/Comparator » (structure à Amplificateur de Détection de Charges/ Filtre de Mise en Forme/Comparateur).

Une telle structure conventionnelle est décrite par exemple dans l'ouvrage de Z.Y. Chang & W.M.C Sansen intitulé "Low noise wide-band amplifiers in bipolar and CMOS technologies", édition Kluwer Academic Publishers, 1991, chapt 5.

Le premier étage CNVR correspond à un amplificateur CSA (pour « Charge Sensitive Amplifier ») qui assure une fonction de conversion d'un paquet de charges Qdet issu du détecteur DET en une impulsion de tension Scsa d'amplitude maximale.

L'amplificateur CSA fonctionne avec un courant de polarisation Ipol1 et fournit un signal de sortie Scsa. L'amplificateur CSA présente une capacité Cf d'accumulation de charge disposée entre l'entrée IN et la sortie Scsa, qui assure la conversion de charges Qdet en tension Scsa.

Le montage CNVR de l'amplificateur CSA comporte un dispositif de remise à zéro RAZ rebouclé en parallèle entre l'entrée IN et la sortie Scsa.

Le dispositif RAZ décharge la capacité de « contre-réaction » Cf avec un courant continu de valeur maximale Iraz1.

Le dispositif RAZ de décharge continue est constitué par une résistance, par exemple.

Le deuxième étage SHPR (pour « shaper »), comporte un montage de filtre passe-bande à amplificateur AMP qui assure les fonctions suivantes :

- Gain d'amplification en tension : l'amplificateur permet d'augmenter l'amplitude utile du signal de sortie Samp qui est présenté au comparateur CMP afin de faire émerger le signal utile du bruit et de s'affranchir des dispersions des comparateurs ;
- Filtrage en bruit du signal d'impulsion de tension Scsa issu du premier amplificateur CSA : le filtrage supprime le bruit basse fréquence et limite la bande passante ; la coupure du filtre dans les basses fréquences supprime aussi les fluctuations de mode commun liées à des empilements d'évènements, comme détaillé par la suite.

L'amplificateur AMP fonctionne avec un courant de polarisation Ipol2 et fournit en sortie Samp un signal d'impulsions mises en forme. Le montage SHPR comporte un premier condensateur C1 intercalé en série sur l'entrée (-) de l'amplificateur AMP et un second condensateur C2 disposé sur une boucle de contre-réaction entre l'entrée (-) et la sortie Samp.

Selon l'état de la technique, un élément résistif R2 est disposé en parallèle au condensateur C2 sur la boucle de contre-réaction pour déterminer la fréquence de coupure du filtre SHPR.

Le gain en tension du montage SHPR est ajusté par le rapport des capacités -C1/C2.

Le troisième étage CMPR a pour fonction de comparer le potentiel du signal Samp par rapport à un seuil de tension Vth, et en cas de détection de franchissement du seuil, produire une impulsion de signal Scomp de comparaison, ici de niveau haut.

Un circuit LOGT de portes logiques remet en forme les impulsions de niveau de comparaison Scmp en impulsions calibrées d'état logique 0 ou 1 pour incrémenter correctement le compteur binaire CNT, de façon analogue à des impulsions carrées de signal d'horloge.

La principale difficulté dans les chaînes d'acquisition AQC est d'assurer la conversion charges/tension puis l'amplification de très faibles paquets de charges, tout en respectant de fortes contraintes de limitation de la consommation, en particulier dans les architectures matricielles, ainsi que des contraintes de rapport signal à bruit S/N suffisant afin de ne pas compter de faux évènements.

Pour maximiser le taux de conversion charges/tension dans le montage CNVR, la valeur de la capacité Cf est réduite au minimum.

En pratique, la capacité Cf qui assure la conversion charge/tension est réduite à la valeur irréductible de la capacité parasite de l'amplificateur CSA (capacité présente entre l'entrée IN et la sortie Scsa) qui est liée à la technologie d'implantation du circuit électronique utilisé.

L'amplitude maximale théorique des impulsions du signal Scsa a la valeur limite suivante :

$$\mathrm{Scsa_{Max}} = \frac{\mathrm{Qdet}}{\mathrm{Cf}} = \frac{\mathrm{q.N}}{\mathrm{Cf}}$$

Avec Qdet la valeur d'un paquet de charge en Coulombs,
N le nombre d'électrons/trous produits par la détection d'un photon ou d'une particule ;
q la charge élémentaire de l'électron :$1,6.10^{-19}$ C, Cf la valeur de la capacité IN/Scsa en Farad.

Les dispositifs existants ont l'inconvénient de souffrir de plusieurs limitations.

La première limitation est due à la nécessité d'effectuer un compromis entre trois paramètres de performance de la chaîne d'acquisition à savoir, la fréquence maximale de comptage, l'amplitude minimale des signaux d'impulsions, et la consommation globale des circuits électroniques d'acquisition.

Pour augmenter l'amplitude des impulsions, on peut chercher à augmenter le gain en tension Gv (Gv = -C1/C2) du deuxième étage SHPR d'amplification. Il faut alors augmenter le courant de polarisation Ipol2 de l'amplificateur AMP2 qui limite la vitesse de montée Ta du signal Samp ou augmenter la valeur de la capacité C1.

Mais, une augmentation du courant de polarisation Ipol2 de l'amplificateur AMP augmente fortement la consommation globale des chaînes d'acquisition. Or les dispositifs de détection, surtout à architecture matricielle, ont de fortes contraintes de limitation de courant consommé.

Augmenter la capacité C1 reviendrait à augmenter l'impédance de charge en sortie de l'amplificateur CSA, ce qui réduit l'amplitude de réponse Scsa du premier étage CNVR.

Il faut donc effectuer un compromis entre le gain en tension Gv du deuxième étage SHPR et l'amplitude de réponse Scsa du premier étage CNVR, les 'gains' d'amplification des deux étages CNVR et SHPR devant être réglés conjointement pour atteindre un optimum.

Dans les chaînes d'acquisitions optimisées selon l'état de la technique, lorsqu'un paquet de charges Qdet parvient du détecteur DET sur l'entrée IN de l'amplificateur CSA, le dispositif de décharge RAZ du montage CNVR s'oppose à ce flux de charges Qdet et vient partiellement compenser les charges incidentes avant leur intégrale conversion en tension aux bornes de la capacité Cf. Ainsi, on s'aperçoit que l'amplitude maximale atteinte par le signal Scsa de sortie de l'étage convertisseur est inférieure au tiers de l'amplitude maximale théorique $Scsa_{Max}$ (phénomène appelé « déficit balistique »).

Si l'on cherche à augmenter l'amplitude des impulsions de signal Scsa, on peut diminuer la valeur de la capacité Cf ou augmenter le courant de polarisation Ipol1 de l'amplificateur CSA ou encore, diminuer la source de courant de décharge RAZ. La valeur de la capacité Cf ne peut pas être réduite en deçà de la valeur de la capacité parasite d'entrée/ sortie de l'amplificateur CSA.

Comme exposé précédemment, augmenter le courant de polarisation Ipol1 de l'amplificateur CSA pour augmenter l'amplitude du signal Scsa correspondant à des paquets de charges donnés, reviendrait une fois encore à augmenter fortement la consommation globale des chaînes d'acquisition du dispositif qui, par contrainte, est fortement limitée.

Par exemple, des courants supplémentaires Ipol1 et Ipol2 d'un microampère représentent, dans un imageur matriciel de 1000 X 1000 pixels, un surcroît de consommation de courant global de 2 ampères. Une telle intensité ne peut pas être transportée sur des lignes d'alimentation desservant 1000 pixels sans perte rédhibitoire de tension. (Contraintes de chutes d'alimentation à respecter).

L'effet d'une réduction de la valeur du courant de décharge Iraz généré par le dispositif RAZ est schématisé en traits discontinus sur la figure 4B.

Le schéma de la figure 4B permet de comparer le fonctionnement d'une chaîne d'acquisition optimisée avec un courant nominal Iraz1 (courbe en traits pleins) par rapport à un cas non optimisé avec un courant Iraz2 de valeur plusieurs fois inférieure à Iraz1 (courbe en tirets).

Dans ce cas, la réduction du courant Iraz2 limite l'incidence du courant de décharge RAZ pendant le transfert des charges Qdet dans la capacité Cf et permet d'atteindre une amplitude d'impulsion de tension Scsa proche de l'amplitude maximale théorique $Scsa_{Max}$.

Mais le temps de décharge Td a l'inconvénient de durer considérablement plus longtemps puisque le courant de décharge Iraz2 est réduit.

Par suite, comme indiqué par la figure 4B, les impulsions de charges incidentes Qdet devront être moins fréquentes et la fréquence maximale de comptage sera considérablement limitée.

Inversement, si on cherche à augmenter la fréquence maximale de comptage, il faut augmenter le courant de décharge Iraz. Mais par conséquent, comme illustré en traits pointillés sur la figure 4B, l'amplitude du signal Scsa est affaiblie. Le rapport signal à bruit est alors dégradé.

Par conséquent, on se heurte, pour une consommation donnée (Ipol1, Ipol2) dans les dispositifs existants, à une limitation des performances provenant du nécessaire compromis entre la fréquence maximale de comptage et l'amplitude des signaux d'impulsions.

Les dispositifs de l'état de la technique ont l'inconvénient de présenter une autre limitation due à un problème d'accumulation d'impulsions et de saturation analogue à un phénomène « d'éblouissement » après chaque évènement de détection.

Comme schématisé sur la figure 4C, lorsque la chaîne d'acquisition reçoit une salve de paquets de charges Qdet', Qdet'', Qdet''', à une cadence supérieure à la fréquence de comptage maximale nominale Nmax, la capacité Cf n'a pas le temps nécessaire à une décharge RAZ complète, et le niveau moyen des signaux Scsa, Samp augmente graduellement sans parvenir à redescendre au niveau de repos 0.

Il y a donc un décalage du niveau moyen de tension du signal Sca qui se répercute sur le signal de sortie Samp du deuxième étage SHPR.

Ce problème est connu dans l'état de la technique sous l'appellation de « décalage de ligne de base ».

Le décalage du potentiel moyen du signal Samp appliqué en entrée du comparateur CMP provoque une saturation à niveau constant en sortie Scmp de la chaîne d'acquisition AQC.

Au-delà d'une cadence d'évènements de détection Nsat encore supérieure à $N_{max}$, la chaîne d'acquisition ne distingue plus les impulsions de détection les unes des autres, les signaux Scsa, Samp, Scmp restent complètement saturés et le compteur CNT n'enregistre pas d'impulsion sauf uniquement le premier front de la première impulsion, aboutissant à un résultat aberrant de comptage égal à un.

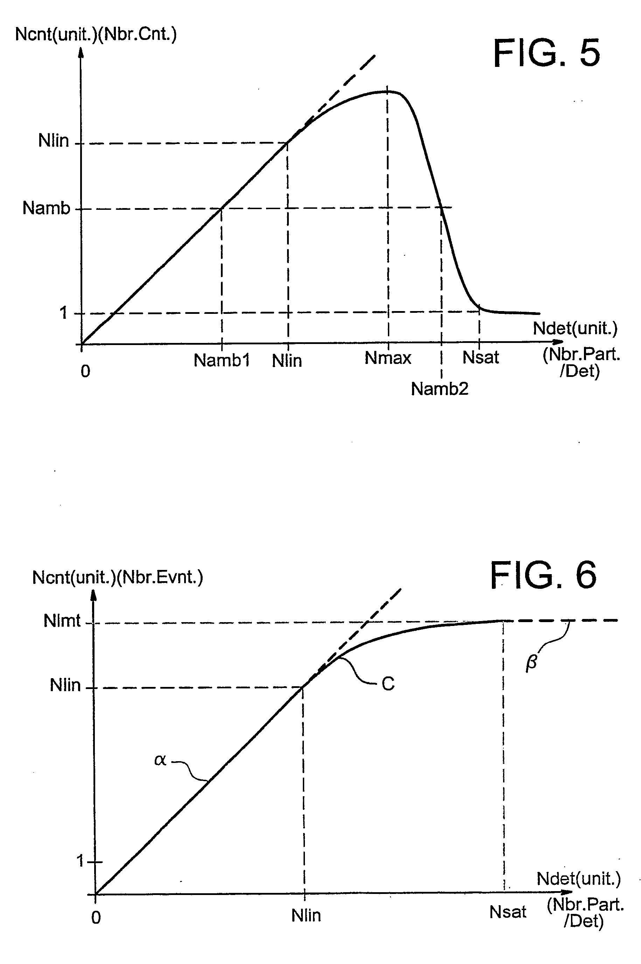

La figure 5 illustre l'allure correspondante de la courbe de réponse des dispositifs de mesure de rayonnements selon l'état de la technique.

Trois zones distinctes apparaissent sur ce type de courbe :

- une zone linéaire [0 ; Nlin] : zone de fonctionnement nominal délivrant une réponse linéaire ;
- une zone non-linéaire [Nlin ; Nmax] : zone de fonctionnement mais dans laquelle la réponse n'est plus linéaire ;
- une zone décroissante au-delà de Nmax : zone « interdite » car les réponses sont inexploitables. A un résultat de comptage Ncnt=Namb peuvent correspondre, de manière ambiguë, deux nombres d'événements de détection Ndet=Namb1 ou Ndet=Namb2. En outre à partir d'un nombre limite d'évènements Nsat, le dispositif compte le premier événement et reste saturé (toutes les impulsions s'empilent les unes sur les autres), ce qui se traduit par le comptage d'un seul évènement.

L'objet de l'invention est de réaliser un dispositif de mesure de rayonnements sans les inconvénients précités.

Le premier objectif de l'invention est de faire disparaître le problème de saturation de la chaîne d'acquisition et le phénomène « d'éblouissement » ou « d'empilement d'évènements » du dispositif de détection.

Le deuxième problème de l'invention est de s'affranchir du compromis entre les paramètres de performance du dispositif que sont la fréquence maximale de comptage, l'amplitude des signaux d'impulsions et la consommation globale de l'entité électronique du dispositif.

Un objectif particulier est d'augmenter la limite de fréquence de comptage maximum d'un dispositif de mesure de rayonnement.

Un autre objectif particulier est d'augmenter l'amplitude des signaux d'impulsions dans une chaîne d'acquisition et d'améliorer le rapport signal à bruit dans un dispositif de détection selon l'invention, notamment dans un dispositif d'imagerie.

Un autre objectif particulier est de réduire la consommation globale d'un dispositif de mesure rayonnement, notamment dans les dispositifs matriciels.

Enfin, un autre objectif de l'invention est de réaliser une chaîne d'acquisition de système de détection matricielle ayant un faible encombrement sous pixel, présentant de faibles sources de bruit, une faible consommation, une conception aisément transposable indépendamment de la technologie d'implantation avec, de préférence, une bonne fiabilité.

## EXPOSE SOMMAIRE DE L'INVENTION

Succintement, l'invention consiste à privilégier le gain de conversion charges/tension du montage à amplificateur CSA de l'étage CNVR en minimisant l'incidence négative du courant de décharge Iraz sur l'amplitude du signal Scsa d'impulsions de détection obtenu en sortie de l'amplificateur CSA.

A cette fin, le courant Iraz est fortement réduit à une valeur Irazmin non conventionnelle compte-tenu des contraintes de fréquence de comptage. Ceci permet de tirer le meilleur parti des charges Qdet incidentes disponibles et par suite de commuter le plus rapidement possible le comparateur CMP. Une fois l'impulsion détectée, on utilise le signal d'impulsions Scmp/Slog généré pour venir interrompre le processus de conversion de charge et le lent processus de retour à l'équilibre, ralenti à cause du courant réduit Irazmin. Une telle interruption est avantageusement assurée par une boucle d'asservissement commandée par le signal Slog qui agit sur l'étage convertisseur de charge CNVR par l'intermédiaire d'un interrupteur électronique disposé en parallèle au dispositif de décharge continue RAZ.

L'invention prévoit notamment de réaliser un dispositif de mesure d'exposition à des rayonnements comprenant au moins un élément de détection de photons ou de particules associé à au moins un circuit d'acquisition et de comptage des événements de détection, dans lequel la courbe de réponse du nombre d'événements comptés en fonction du nombre de photons ou de particules captés par chaque élément de détection, est monotone croissante.

Plus précisément, la courbe de réponse présente une première plage de réponse croissante de façon sensiblement linéaire, le nombre d'événements comptés augmentant proportionnellement au nombre de photons ou de particules captés, suivie d'une seconde plage de réponse simplement croissante, le nombre d'événements comptés continuant à augmenter ou restant stable tant qu'augmente le nombre de photons ou de particules captés.

L'invention prévoit que le circuit d'acquisition comprend un circuit de traitement de signaux délivrant des impulsions de comptage correspondant aux événements de détection, le dispositif comprenant des moyens pour réinitialiser rapidement le circuit de traitement de signaux d'impulsions.

L'invention concerne également un dispositif de détection ou de mesure d'exposition à des rayonnements comprenant au moins un élément de détection de photons ou de particules, chaque élément de détection étant associé à une chaîne d'acquisition et de comptage des événements de détection, la chaîne d'acquisition comprenant un circuit de traitement de signaux délivrant des impulsions de comptage correspondant aux événements de détection, le dispositif comprenant une boucle d'asservissement ou de rétroaction commandant des moyens pour réinitialiser le circuit de traitement de signaux. Avantageusement, la réinitialisation est effectuée de manière discontinue en réponse à chaque impulsion/événement de détection, immédiatement après la phase de conversion de charges issues du détecteur en impulsion.

L'invention peut être réalisée en disposant :

- des moyens pour déclencher un courant de réinitialisation dans un étage d'accumulation de charge du circuit d'acquisition ; ou,
- des moyens pour déclencher rapidement, après chaque événement de détection, le retour à un point d'équilibre de polarisation d'un étage d'amplification polarisé du circuit d'acquisition ; ou,
- des moyens pour décharger des moyens capacitifs d'un étage d'accumulation de charge, en réponse à chaque événement détecté, avec, de préférence, des moyens pour abréger la décharge des moyens capacitifs.

Selon un mode de réalisation de l'invention le dispositif comprend des moyens pour générer deux valeurs de courant de décharge dans un étage de conversion de charge ou des moyens pour commuter la valeur du courant de décharge dans un étage amplificateur d'accumulation de charge.

Ainsi, le courant de décharge de l'étage d'accumulation de charge prend une première valeur durant les temps de repos et une seconde valeur lors de la détection d'un événement, la seconde valeur étant supérieure à la première valeur.

Avantageusement, la valeur du courant de décharge de l'étage d'accumulation de charges durant les temps de repos est réglée à une valeur de l'ordre du courant parasite, de fuite ou d'obscurité de l'élément détecteur.

Selon un autre mode de réalisation, l'étage de conversion de charge comporte une source de courant de décharge constante et une source de courant de décharge déclenchée ou commutée.

Selon un autre aspect de l'invention, le dispositif comprend des moyens de commutation aptes à court-circuiter des moyens capacitifs d'un étage amplificateur de conversion de charge.

Selon un autre aspect de l'invention, le circuit d'acquisition et de comptage comprend une boucle d'asservissement ou de rétroaction entre un point en aval d'un étage d'accumulation de charge et ledit étage. Avantageusement, la boucle de commande d'asservissement retransmet des signaux d'impulsions de comptage et commande des moyens de commutation reliés à des bornes de l'étage d'accumulation de charge.

Alternativement, la boucle d'asservissement commande une source de courant de décharge.

De façon avantageuse, l'invention permet d'augmenter l'amplitude de montée ainsi que sa rapiditée à atteindre un niveau donné d'un signal d'impulsions émis lors de chaque événement de détection tout en réduisant le temps de descente dudit signal.

L'invention prévoit encore un procédé d'acquisition et de comptage d'événements de détection mettant en oeuvre un dispositif de mesure d'exposition à des rayonnements comprenant au moins un élément de détection associé à au moins un circuit d'acquisition et de comptage des événements de détection, le circuit d'acquisition comprenant un circuit de traitement de signaux délivrant des impulsions de comptage correspondant aux événements de détection, le procédé comportant une étape consistant à réinitialiser de manière discontinue le circuit de traitement de signaux, en réponse à chaque impulsion/événement de détection. Avantageusement la réinitialisation est effectuée rapidement, immédiatement après la phase de conversion de charges issues du détecteur en impulsion.

De préférence, le procédé met en oeuvre une étape consistant à effectuer un asservissement retransmettant les signaux d'impulsions de comptage pour commander la réinitialisation. Avantageusement, l'asservissement est rebouclé entre un point en aval d'un étage d'accumulation/conversion de charge et ledit étage. Selon un mode de réalisation, le procédé comporte une première étape de décharge continue d'une capacité de conversion de charge, le procédé de réinitialisation consistant à abréger la première étape par l'autre étape de réinitialisation effectuée après chaque incrémentation des moyens de comptage.

## BREVE DESCRIPTION DES FIGURES

D'autres objectifs, caractéristiques et avantages de l'invention apparaîtront à la lectuer de la description de modes de réalisation ci-après, en regard des dessins annexés, sur lesquels :

- la figure 1 représente un schéma de principe d'une chaîne d'acquisition de détecteur de type connu ;
- la figure 2 représente une architecture matricielle de dispositif de détection de type connu ;
- la figure 3 représente un schéma électronique de réalisation d'une chaîne d'acquisition de détecteur selon l'état de la technique ;

- les figures 4A à 4D représentent des diagrammes de signaux d'impulsions dans une chaîne d'acquisition selon l'état de la technique ;
- la figure 5 représente une courbe de réponse de dispositif de détection de rayonnements selon l'état de la technique ;
- la figure 6 représente une courbe de réponse de dispositif de mesure d'exposition à des rayonnements selon l'invention ;
- la figure 7 représente un schéma de réalisation électronique de circuit d'acquisition et de comptage selon l'invention ;
- les figures 8A-8D représentent schématiquement des diagrammes de signaux d'impulsions obtenus dans le circuit d'acquisition selon l'invention ;
- les figures 9A-9F représentent des diagrammes de résultats de mesure de signaux d'impulsions obtenus dans une chaîne d'acquisition selon l'invention ;
- la figure 10 représente le schéma d'un dispositif de réinitialisation ; et
- la figure 11 représente un autre mode de réalisation de l'invention.

## EXPOSE DETAILLE DE MODES DE REALISATION DE L'INVENTION

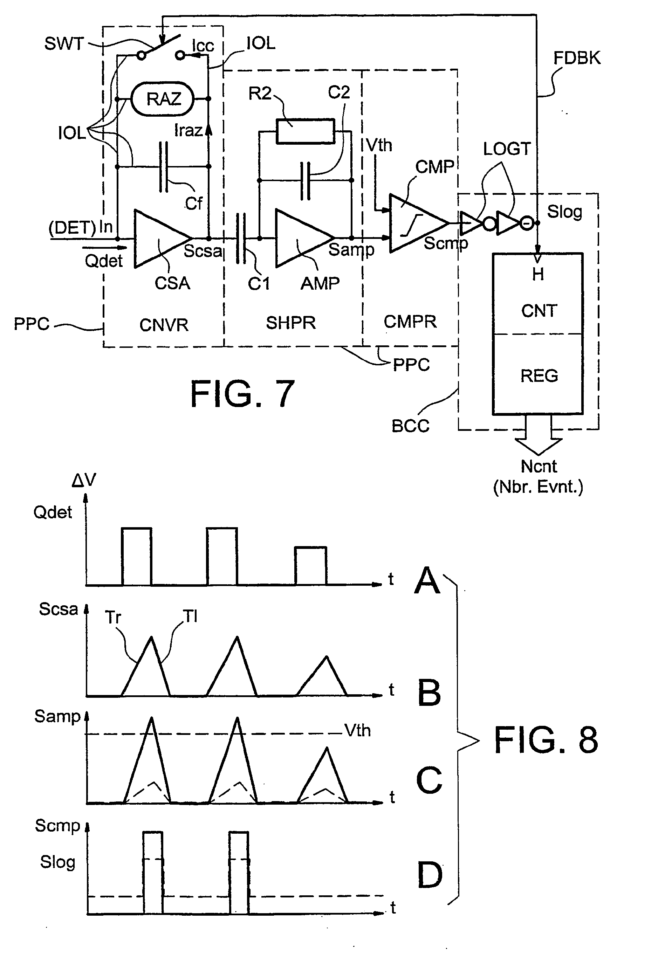

La figure 7 représente un schéma de réalisation de chaîne d'acquisition d'un élément détecteur DET ou pixel d'un dispositif de détection de rayonnement selon l'invention.

L'entité de détection (non représentée) peut être un détecteur unitaire, un groupe d'éléments détecteurs discrets ou une ou plusieurs couches de matériau détecteur formant un continuum de détecteurs élémentaires correspondant à un réseau de pixels.

La chaîne d'acquisition comporte une partie analogique PPC formant un circuit de traitement et de mise en forme des impulsions issues du détecteur DET, suivi d'une partie logique BCC formant un circuit de comptage binaire.

La partie analogique PPC est composée d'un étage CNVR de conversion de charge à amplificateur CSA en montage intégrateur, suivi d'un étage SHPR de mise en forme d'impulsions à amplificateur AMP en montage de filtre passe bande, et d'un troisième étage CMPR de détection de franchissement de seuil à amplificateur CMP en montage comparateur.

La partie logique BCC comporte un circuit de comptage numérique CNT à registre REG ayant pour fonction de s'incrémenter à chaque évènement détecté et de conserver en mémoire le résultat de comptage Ncnt du nombre d'évènement détecté en vue d'un transfert de données vers un système de lecture ou un système d'imagerie à la fin de la période d'irradiation.

Le premier étage CNVR de conversion est formé par un montage d'amplificateur détecteur de charge effectuant une conversion de charges électronique Qdet en niveau de tension Scsa.

L'amplificateur CSA est configuré en montage intégrateur ou en montage de filtre passe-bas avec une boucle de circuit IOL reliant la sortie Scsa de l'amplificateur CSA sur une entrée IN de l'amplificateur CSA.

Selon le mode de réalisation de la figure 7, le circuit IOL comporte une capacité Cf, un élément de réinitialisation RAZ et un élément de commutation SWT reliés en parallèle entre la sortie Scsa et l'entrée IN de l'amplificateur CSA.

L'invention vise à privilégier le gain de conversion charges/tension du montage à amplificateur CSA de l'étage CNVR en minimisant l'incidence négative du courant de décharge Iraz sur l'amplitude du signal Scsa d'impulsions de détection obtenu en sortie de l'amplificateur CSA.

Dès que l'impulsion de charge est détectée, le signal d'impulsion généré est utilisé pour venir interrompre le processus de conversion CNVR.

La gestion de l'interruption est assurée par une boucle d'asservissement commandée par le signal Slog qui agit sur l'étage convertisseur de charge CNVR par l'intermédiaire de l'interrupteur électronique SWT disposé en parallèle au dispositif de décharge continue RAZ.

Selon l'invention, la chaîne d'acquisition comporte donc une boucle de d'asservissement, ou autrement dit une boucle de rétroaction ou de contre-réaction, connectée entre un point en aval de la sortie de l'étage de conversion CNVR et le montage amplificateur de conversion de charge CSA de cet étage CNVR.

Selon le mode de réalisation illustré figure 7, l'asservissement FDBK de la chaîne d'acquisition effectue un rebouclage depuis la partie de comptage numérique BCC vers le premier étage CNVR de la partie analogique de la chaîne.

Suivant ce mode de réalisation, la boucle d'asservissement FDBK commande l'élément de commutation SWT.

Dans le mode de réalisation de la figure 7, la boucle de rétroaction provient de la partie numérique BCC de la chaîne d'acquisition en aval de l'étage CNVR contenant le commutateur SWT, ce qui permet avantageusement d'appliquer des signaux logiques pour la commande de l'élément de commutation SWT.

Plus précisément, selon l'exemple de la figure 7, la boucle de contre-réaction relie la sortie Slog du signal d'impulsion de niveau logique issu de la porte inverseuse LOGT interposée entre la sortie Scmp du comparateur CMP et la borne d'incrémentation du compteur CNT. En fonctionnement, le signal d'impulsions calibrées SLOG qui incrémente le compteur binaire CNT-REG est donc retransmis par la boucle d'asservissement FDBK sur l'étage CNVR de conversion de charges.

Dans la réalisation de la figure 7, le montage de l'étage de conversion CNVR comporte donc une capacité Cf, un élément de réinitialisation RAZ et un élément de commutation SWT reliés en parallèle entre la sortie Scsa et l'entrée IN de l'amplificateur CSA.

Pour obtenir un taux d'intégration maximum, la valeur de la capacité de contre-réaction Cf est réduite au minimum.

Dans certaines formes de réalisation pratique, le montage amplificateur ne comporte pas de condensateur connecté entre l'entrée IN et la sortie Scsa de l'amplificateur car la capacité Cf de contre-réaction Scsa/IN est réduite (arasée) à la capacité parasite irréductible qui existe entre l'entrée et la sortie du composant amplificateur. Dans ce cas, on ne trouve pas réellement de composant spécifique de condensateur dans le montage amplificateur de l'étage de conversion de charge.

Le système de réinitialisation RAZ décharge la capacité Cf suivant une valeur de courant maximum Iraz. Le système de réinitialisation RAZ peut être formé par exemple par une source de courant de valeur Iraz ou par un élément résistif ayant une valeur de résistance R correspondant à la valeur du courant maximum Iraz lorsque la tension aux bornes de la capacité cf atteint une valeur de tension crête.

Selon une forme de réalisation, une source de courant de valeur Iraz, est formée par un montage à transistor polarisé de sorte que son courant de saturation correspond à la valeur de courant maximum Iraz.

Selon le premier mode de réalisation de l'invention, la boucle de circuit IOL comprend un élément de commutation SWT. Le dispositif SWT peut être formé d'un commutateur reliant directement les bornes d'entrées IN et de sortie Scsa de l'amplificateur, de façon à réaliser un court circuit lorsque le contact du commutateur SWT est fermé, et un circuit ouvert lorsque le commutateur SWT est ouvert.

Dans le premier mode de réalisation, le commutateur SWT est relié en parallèle aux bornes IN/Scsa du circuit IOL, donc de la capacité Cf et de la source de courant Iraz.

L'élément de commutation SWT est commandé par la boucle d'asservissement FDBK, provenant de la partie numérique BCC de la chaîne d'acquisition.

Les figures 8A-8D schématisent l'allure des principaux signaux d'impulsions Qdet, Scsa, Samp, Scmp et /Slog aux divers stades de la chaîne d'acquisition PPC-BCC au cours d'une phase typique de fonctionnement du dispositif selon l'invention.

Initialement, au repos, comme illustré sur le diagramme 8D, le signal Scmp a un niveau bas 0, et le signal Slog est aussi dans un état logique bas (inactif). L'état inactif du signal Slog transmis par la boucle de contre-réaction FDBK maintient le commutateur SWT ouvert, par convention dans l'exemple de réalisation de la figure 7.

Un évènement de capture d'un photon ou d'une particule par l'élément détecteur, DET, provoque la génération d'un paquet de charge Qdet qui fait apparaître une brève impulsion de courant et/ou de tension à l'entrée IN de l'étage initial de conversion CNVR.

La capacité Cf du montage intégrateur de l'amplificateur CSA collecte, accumule et stocke la charge électronique Qdet issue du détecteur DET. Par conséquent, la tension du signal de sortie Scsa monte brusquement pour atteindre un pic de tension ayant une valeur crête $Scsa_{MAX}$ ($Scsa_{MAX} \cong Qdet/Cf$).

Le temps de montée Tr du signal de sortie Scsa dépend de la vitesse de montée de l'amplificateur, qui est liée aux conditions de polarisation, en particulier au courant de polarisation Ipol1 de l'amplificateur CSA.

Le signal Samp du deuxième étage SHPR reproduit l'impulsion du signal Scsa en modifiant son amplitude (et sa forme). Lorsque le niveau du signal Samp franchit le niveau de seuil Vth schématisé sur le diagramme 8C, le comparateur CMP délivre une impulsion Scmp de niveau haut, ce qui correspond à un passage du signal logique Slog à l'état haut (actif).

Le changement d'état du signal logique Slog provoque l'incrémentation du compteur binaire CNT d'une unité.

Parallèlement, la boucle d'asservissement FDBK selon l'invention, transmet alors une commande de fermeture (Slog actif) au dispositif de commutation SWT.

La fermeture de commutateur SNT provoque un court-circuit aux bornes de la capacité Cf et une décharge quasi-immédiate de la capacité Cf.

Par conséquent, comme illustré sur le diagramme 8B, le niveau de sortie Scsa de l'étage convertisseur de charge CNVR redescend dans un intervalle de temps TI très bref, grâce à l'invention. Dès que le niveau de sortie Samp repasse en dessous du niveau de seuil Vth, le comparateur relâche le niveau haut de l'impulsion de sortie Scmp.

Dès lors, de façon avantageuse selon l'invention, la chaîne d'acquisition est de nouveau prête pour traiter une nouvelle impulsion Qdet issue du détecteur DET.

Tous les signaux Scsa, Samp, Scmp et Slog sont alors revenus à leur niveau de repos, 0 ici, et le commutateur SWT est réouvert par l'état inactif du signal Slog. Le montage CNVR à amplificateur CSA polarisé retrouve son niveau de polarisation du détecteur DET en entrée IN.

De façon avantageuse, l'invention fait disparaître le temps d'éblouissement dans les systèmes de détection de rayonnements et d'acquisition d'événements.

En effet, si le détecteur de rayonnement génère une impulsion de charge Qdet, immédiatement après l'impulsion de comptage Scmp/Slog, la chaîne d'acquisition CNVR/SHPR/CMPR/BCC est dès lors prête pour traiter l'impulsion et enregistrer l'évènement.

Par conséquent, comme il apparaît en comparant les schémas des figures 4A-4D et 8A-8D, la chaîne d'acquisition selon l'invention peut travailler à une fréquence (ou cadence) de comptage d'évènements beaucoup plus élevée.

Dans le cas exceptionnel où un second évènement débuterait avant la fin du traitement d'un premier évènement, la chaîne d'acquisition selon l'invention est entièrement réinitialisée à la fin du traitement du premier événement, sans prendre en compte le nouvel événement. La chaîne est prête à traiter un futur troisième événement et à enregistrer l'impulsion correspondante, malgré le second événement intercalaire.

Ainsi, grâce à l'invention, il n'y a pas de décalage du potentiel moyen de sortie Scsa, Samp des étages d'amplification CNVR et SHPR.

De façon avantageuse, l'invention permet donc de supprimer le phénomène connu sous l'appellation de « décalage de ligne de base ».

Autrement dit, il n'y a pas de saturation de la chaîne d'acquisition selon l'invention.

Ainsi, de façon avantageuse, le dispositif selon l'invention empêche toute saturation de la chaîne d'acquisition par accumulation d'impulsions et inhibe les effets d'un empilement d'évènements.

En conséquence, la réponse du dispositif selon l'invention ne présente plus de phénomène de saturation, ni même de décroissance des résultats de comptage.

La figure 6 représente la courbe de la fonction de transfert d'un dispositif selon l'invention, la courbe donnant le nombre d'événements comptabilisés en fonction du nombre de photons ou de particules captées par l'entité de détection.

La courbe de réponse du dispositif selon l'invention présente une fonction de transfert monotone croissante, le nombre d'évènements comptés augmentant continûment en fonction du nombre d'impulsions de détection de photons ou de particules captées par le dispositif.

La courbe de réponse de la fonction de transfert du dispositif selon l'invention tend à être strictement croissante entre deux asymptotes $\alpha$ et $\beta$.

L'asymptote $\alpha$ correspond à un axe passant par l'origine O suivant laquelle le nombre d'évènements comptés Ncnt est proportionnel au nombre Ndet de particules ou de photons captés par le détecteur, ces deux nombres étant sensiblement égaux dans la zone linéaire (Ncnt = Nlin = Ndet).

En augmentant, le nombre d'évènements comptés Ncnt tend vers un nombre limite supérieur Nlmt représenté par l'asymptote $\beta$, lorsque le nombre Ndet de photons ou de particules captées par le détecteur augmente et tend vers l'infini.

Le nombre limite supérieur Nlmt est donné par la formule suivante :

$$\mathtt{Nlmt\ =\ Ti/\tau}$$

avec

Ti, la période de comptage des événements ou la durée d'échantillonnage des images captés ;

$\tau$ est la durée de gestion d'un événement par la chaîne d'acquisition.

Ainsi, la courbe de réponse du dispositif présente seulement deux zones distinctes qui apparaissent sur l'allure type de la courbe de la figure 6 :

- une zone de réponse linéaire $\alpha$ [O ; Nlin] (nombre Ndet de particules captées correspondant environ au nombre Ncnt d'évènements comptés jusqu'à une borne de linéarité Nlin) : zone dans laquelle la réponse est sensiblement linéaire (proportionnelle) ; c'est la zone de fonctionnement nominal du dispositif.
- une zone de réponse $\beta$ [Nlin ; Nlmt]: zone au delà de la borne de linéarité Nlin, dans laquelle la fonction de transfert reste monotone croissante ; c'est une zone de fonctionnement dans laquelle la réponse est exploitable (après application d'un facteur de correction systématique, par exemple, ou par référence à une abaque d'étalonnage), bien que la fonction de transfert ne soit plus linéaire.

Il ressort, par comparaison des figures 5 et 6, que la réponse du dispositif selon l'invention ne comporte pas de zone décroissante au-delà de la zone non-linéaire croissante $\beta$.

La courbe de réponse d'un dispositif selon l'invention tend vers une limite Nlmt, en termes d'événements comptés Ncnt, qui est supérieure à toutes les valeurs que le dispositif peut compter : sur la figure 6, Nlmt est supérieure à toute valeur comptée par le dispositif.

De façon avantageuse, selon l'invention, chaque valeur de nombre d'événements compté par la chaîne d'acquisition correspond à une et une seule valeur de nombre de particules/photons captés par le détecteur. Il n'apparaît plus de valeur de résultat de comptage Ncnt correspondant de manière ambiguë à deux valeurs de nombre de photons/ particules captées par le détecteur. Par conséquent, il n'y a plus de résultat aberrant.

Au dessus d'un certain nombre de photons (Nsat, figure 6) le dispositif atteint la plage de saturation de valeur Nlmt non exploitable mais par ailleurs non perturbatrice pour la plage linéaire contrairement à l'art antérieur.

L'invention permet d'optimiser aussi, de manière indépendante, le front montant Tr et le front descendant Tl du signal de sortie Samp de l'étage de conversion CNVR, comme suit :

- le front montant Tr du signal Samp est déterminé par le courant de polarisation Ipol1 de l'amplificateur CSA et par le courant de décharge Iraz de la capacité Cf (et aussi par le courant Ipol2 de l'amplificateur et par sa fonction de transfert). En fixant le courant de décharge Iraz à une valeur limitée par rapports aux valeurs conventionnelles dans les dispositifs connus, la quantité de charges Qdet effectivement convertie est maximisée, ce qui accroît la vitesse de montée du front Tr et donc la valeur maximale de crête du signal Scsa ;
- le front descendant Tl ne dépend plus selon l'invention du courant Iraz. Le temps de descente Tl est considérablement abrégé par l'établissement du court-circuit SNT selon l'invention.

De façon avantageuse, l'invention, permet de s'affranchir dans une certaine mesure du compromis fréquence maximale de comptage/amplitude des impulsions.

De plus, pouvoir réduire les courants de polarisation Ipol1 et Ipol2 de la chaîne d'acquisition permet d'abaisser la consommation globale de l'ensemble du dispositif à architecture matricielle.

En outre, selon des variantes de réalisation de l'invention exposées ci-après, il est encore possible de réduire au plus bref l'intervalle de temps Tl de retour au point d'équilibre en amortissant les phénomènes d'oscillations dus à la décharge capacitive Cf dans un circuit d'interrupteur SWT sans résistance.

L'invention permet par conséquent, de minimiser l'incidence négative du courant de décharge Iraz sur l'amplitude du signal Scsa obtenue en sortie de l'amplificateur CSA de façon à privilégier le gain de conversion charges/tension. A cette fin, il est prévu de réduire fortement le courant Iraz à une valeur IRAZMIN non conventionnelle, compte tenu des contraintes de fréquence de comptage. Ceci permet de tirer le meilleur parti des charges incidentes Qdet disponibles et par suite de commuter le plus rapidement possible le comparateur CMP. Une fois l'impulsion détectée, le signal Slog (ou Scmp) est utilisé pour venir interrompre le lent processus de retour à l'équilibre, ralenti à cause de la valeur réduite du courant IRAZMIN.

En effet, pour gagner en amplitude disponible en sortie CSA, la source de courant RAZ est réglé à une valeur IRAZMIN très faible.

La valeur IRAZMIN peut être optimisée en la minimisant à une valeur légèrement supérieure au courant parasite continu maximum des détecteurs (courant de fuite qui correspond généralement au courant d'obscurité ou de traînage du détecteur).

Une valeur IRAZMIN légèrement supérieure au courant parasite continu maximum des détecteurs permet de s'affranchir d'un comptage de faux évènement.

L'invention permet ainsi de régler le dispositif de décharge continue RAZ de manière non conventionnelle. En effet, pour gagner en amplitude disponible sur le signal de sortie Scsa, le courant Iraz est réglé à une valeur Irazmin très faible. Ceci permet de réduire l'incidence de Iraz pendant le transfert de charges Qdet du détecteur DET dans la capacité Cf et donc d'augmenter l'amplitude du signal Scsa pour des paquets de charges Qdet donnés.

Autre conséquence avantageuse de l'invention, tant que le signal Scsa (ou son image Samp) n'atteint pas la valeur de seuil Vth du comparateur, celui-ci ne génère pas d'impulsion Scmp (donc Slog inactif) entraînant un rendement maximum de conversion des paquets de charges Qdet issus du détecteur.

Cette amélioration du rendement permet de relâcher les exigences de gain sur les étages suivants ce qui permet indirectement de réduire leur courant de polarisation donc au final d'abaisser la consommation du dispositif de détection, ce qui est avantageux notamment pour un imageur matriciel.

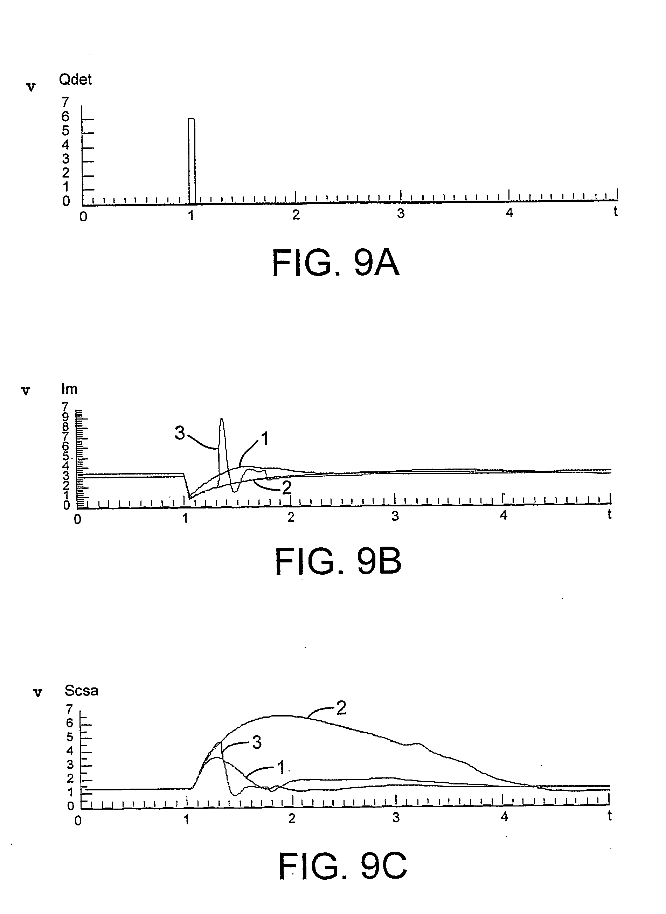

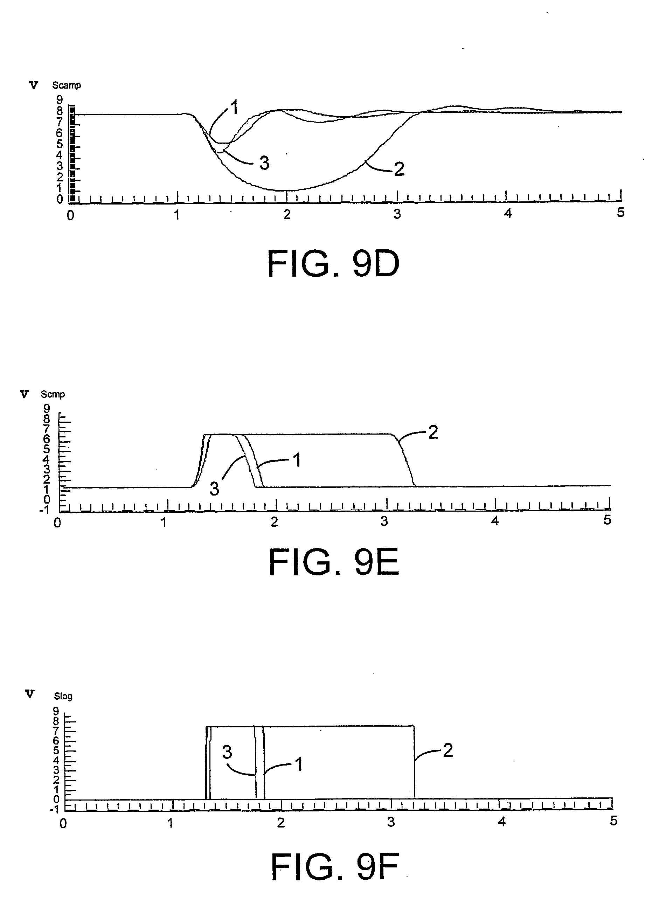

Les figures 9A-9F illustrent, aux fins de comparaison, des chronogrammes d'amplitude de signaux, respectivement Qdet, In, Scsa, Samp, Slog, Scmp, mesurés sur les étages correspondants de trois chaînes d'acquisition ayant des configurations différentes, comme suit :

- les premières courbes de résultats de mesures en traits grisés (indice 1) correspondent aux signaux d'une chaîne d'acquisition selon l'état de la technique avec un courant de décharge constant de valeur Iraz1 conventionnelle ;
- les courbes de résultats en traits noirs (indice 2) correspondent aux signaux d'une chaîne d'acquisition selon l'état de la technique avec un courant de décharge constant réduit à une faible valeur Iraz2, par exemple dix fois inférieure à la valeur Iraz1 conventionnelle ; et,
- les courbes de résultats en traits clairs (indice 3) correspondent aux signaux d'une chaîne d'acquisition avec un double système RAZ/SWT de décharge et de réinitialisation commutée selon l'invention, dans lequel le courant de décharge constant Iraz est réduit à une faible valeur Irazmin, par exemple dix fois inférieure à la valeur Iraz1 conventionnelle.

La comparaison des courbes en traits grisés (indice 1) et en traits noirs (indice 2) montre l'intérêt de réduire le courant Iraz pour maximiser la quantité instantanée de charges convertie en tension.

La comparaison des courbes en traits noirs (indice 2) et en traits clairs (indice 3) fait apparaître l'incidence de l'interrupteur SWT piloté par l'asservissement FDBK pour raccourcir le temps de réinitialisation de la chaîne d'acquisition.

La comparaison de ces résultats de mesure d'une chaîne d'acquisition optimisée selon l'état de la technique (indice 1) et d'une chaîne non optimisée selon l'état de la technique (indice 2) avec les résultats de mesure d'une chaîne d'acquisition selon l'invention (indice 3) qui comporte une source de courant réduite Irazmin adjointe à un circuit de réinitialisation discontinue, fait ressortir les avantages de la solution proposée selon l'invention.

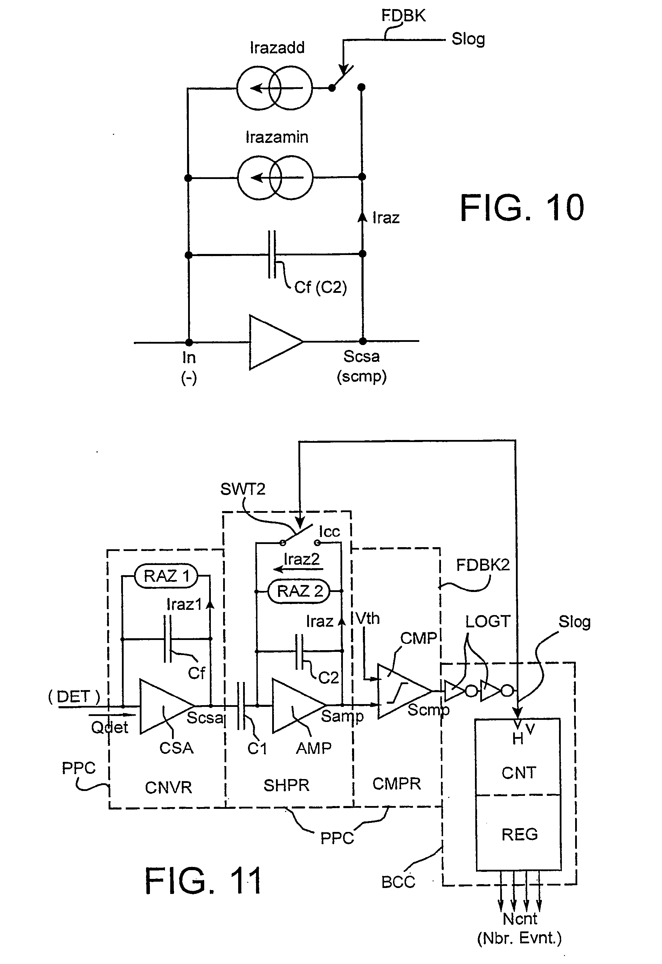

Selon un autre mode de réalisation de l'invention illustré figure 10, le dispositif de réinitialisation comporte deux sources de courant, une source de courant constant Irazmin de décharge relié en parallèle avec une source de courant additionnelle Irazadd commutée. Ce dispositif de double réinitialisation à deux sources de courant est relié aux bornes Scsa et In entre lesquelles se trouve la capacité Cf.

La commutation de la source de courant additionnelle Irazadd est commandée par le signal Slog transmis par la boucle d'asservissement FDBK, comme décrit précédemment.

Le fonctionnement et la commande des sources de courant dans ce mode de réinitialisation s'opèrent de la façon suivante :

- Pendant la phase de conversion de charges en tension (front montant Tr et pic de tension Scsa) qui suit l'apparition du paquet de charges Qdet, l'absence de commande Slog (Scmp bas, Slog haut) maintient le commutateur SWT ouvert et met hors circuit la source de courant additionnelle Irazadd, de sorte que le courant de décharge Iraz de la capacité Cf a pour valeur :

$$Iraz = Irazmin$$

- Pendant la phase de réinitialisation (retour au point d'équilibre) correspondant au front de descente Tl qui suit le franchissement du seuil Vth par le signal Samp, l'impulsion de commande Slog (Scmp haut, Slog bas) ferme le commutateur SWT et met en circuit la source de courant additionnelle Irazadd avec la capacité Cf, de sorte que son courant de réinitialisation Iraz vaut :

$$Iraz = Irazadd + Irazmin$$

- Pendant le reste du cycle (repos au point d'équilibre Scsa=0) qui suit le retour du signal Samp en dessous du niveau du seuil Vth (Scmp bas, Slog haut), le commutateur SWT reste ouvert et le courant de

décharge Iraz de la capacité Cf se maintient à une valeur :

$$Iraz = Irazmin$$

La disposition de deux sources de courants de valeur contrôlée, Irazmin constante et Irazadd commutée, offre l'avantage d'empêcher l'apparition d'un phénomène d'oscillations critiques qui se produirait avec un courant de décharge Iraz quasi infini et aurait des répercussions sur les potentiels IN et Scsa de l'amplificateur et sur la polarisation du détecteur.

Selon un autre mode de réalisation de l'invention, le double système de réinitialisation discontinue/décharge constante selon l'invention, peut être réalisé sous forme d'un dispositif de source de courant variable commandé par la boucle d'asservissement FDBK pour générer plusieurs valeurs de courant de réinitialisation/décharge I1 et I2 (avec I2 > I1).

La première valeur inférieure de courant I1 peut notamment être minimisée à une valeur de courant Irazmin à peine supérieure au courant de bruit ou d'obscurité du détecteur. La seconde valeur supérieure de courant I2 peut être une valeur de courant optimale correspondant à un temps de descente Tl minimum.

Dans la description des modes de réalisation qui précède, la boucle d'asservissement FDBK est rebouclée sur le montage d'amplificateur convertisseur de charge CSA du premier étage CNVR de la chaîne d'acquisition.

Selon un autre mode de réalisation, illustré figure 11, l'asservissement FDBK2 peut être rebouclé sur le montage de filtre à amplificateur AMP du second étage SHPR de mise en forme d'impulsions de la chaîne d'acquisition.

Selon ce mode de réalisation, l'élément résistif R en parallèle sur le condensateur C2 qui assure le positionnement du pôle du filtre SHPR dans l'état de la technique antérieure peut être remplacé par un dispositif de double réinitialisation RAZ2/SWT2 selon l'invention.

Une source de courant de décharge RAZ2 et un commutateur SWT2 peuvent ainsi être relié en parallèle avec la capacité C2 entre les bornes d'entrée (-) et de sortie Samp de l'amplificateur AMP du second étage SHPR. Le commutateur SWT2 est alors conformément à l'invention commandé par la boucle d'asservissement FDBK2.

La source de courant RAZ2 peut par exemple être réalisée par un transistor polarisé pour délivrer un courant maximum Iraz2. Dans ce cas, la valeur de résistance dynamique du transistor joue avantageusement le rôle de la résistance R2 de coupure du filtre et/ou le rôle de la résistance R de limitation du courant de réinitialisation.

Conformément aux alternatives présentées précédemment, le dispositif de double réinitialisation monté sur le second étage SHPR selon l'invention peut aussi être formé de deux sources de courant Irazmin/Irazadd (constant et commuté) ou d'une source de courant variable I1/I2 en suivant le synoptique des modes de réalisations précédents.

Plus généralement, l'invention s'applique à une chaîne d'acquisition comportant une structure différente d'étages amplificateurs, par exemple à un ou deux étages ou à plus de trois étages d'amplification et à des étages ayant des fonctions distinctes de celles exposées ici.

Selon encore un autre mode de réalisation, la boucle d'asservissement peut être reliée en sortie du comparateur CMP et transmettre vers l'un des étages précédents le signal d'impulsions Scmp comme signal de commande de commutation du dispositif de double réinitialisation selon l'invention.

De façon générale, la boucle d'asservissement qui commande le dispositif de double réinitialisation selon l'invention peut être rebouclé entre un point en aval du dispositif de double réinitialisation et l'étage amplificateur dans lequel se trouve le dispositif.

## AVANTAGES APPORTES PAR L'INVENTION

De façon générale, l'invention permet de décorréler le processus de conversion des charges incidentes en tension et le processus de réinitialisation rapide des niveaux de sortie des étages amplificateurs dans une chaîne d'acquisition de dispositif de détection de rayonnement.

L'ajout en parallèle d'un dispositif d'interruption permet d'aider en vitesse la chaîne à RAZ continue lors de la phase de retour au point d'équilibre. De plus, pour réaliser ce dispositif il suffit de rajouter simplement un élément de commutation SWT piloté par le signal d'impulsions logiques SLOG en parallèle au dispositif de décharge RAZ (réglé à Irazmin).

Les avantages de cette architecture sont les suivants :

Il s'agit d'une chaîne purement analogique, sans horloge de pilotage dans la partie analogique (donc aucun parasite de commutation) avec des points de repos statiques stables. De plus, si le détecteur a un courant d'obscurité inférieur au courant de décharge Iraz du montage à amplificateur CSA, ce courant de fuite n'a plus d'influence sur le fonctionnement de la chaîne d'acquisition analogique de chaque pixel, car il est immédiatement supprimé en permanence par le dispositif de décharge RAZ.

De façon avantageuse, dès l'instant suivant le comptage d'un évènement, chaque pixel se repositionne exactement à son point de repos qui lui est propre. Les seules sources de bruit sont celles liées à l'électronique qui sont inévitables.

De par sa fonction, le courant Iraz du dispositif de décharge RAZ nécessite peu de précision ni d'homogénéité entre les pixels. Ainsi, on peut relâcher les contraintes d'architecture et d'implantation.

De façon avantageuse le dispositif de double réinitialisation selon l'invention, occupe très peu de place dans le schéma d'implantation du circuit d'acquisition d'une chaîne d'acquisition. Ceci est particulièrement important pour la réalisation de chaîne d'acquisition sous pixel dans une structure matricielle de dispositif de détection.

Par conséquent l'invention peut être mise en oeuvre dans des architectures simples et robustes, ayant déjà fait preuve de leur fiabilité.

## APPLICATIONS DE L'INVENTION

L'invention peut s'appliquer à la réalisation de tout type de dispositif de détection et de mesure d'exposition à des rayonnements.

L'invention s'applique particulièrement à la réalisation de détecteurs d'imagerie utilisés en radiologie, domaine dans lequel on détecte des photons de rayons X, dans ce cas. Cependant, il est clair que l'invention s'applique à la détection de tout type de photon ou de particule.

Le dispositif s'applique particulièrement avantageusement à la réalisation de détecteurs agencés selon une architecture matricielle, notamment aux senseurs matriciels formés d'un réseau de pixels, utilisés en imagerie.

D'autres applications, variantes et modes de réalisation pourront être mis en oeuvre par l'homme de métier sans sortir du cadre de la présente invention.

## Revendications

1. Dispositif de mesure d'exposition à des rayonnements comprenant au moins un élément de détection de photons ou de particules associé à au moins un circuit d'acquisition et de comptage des événements de détection, le circuit d'acquisition comportant un circuit de traitement de signaux délivrant des impulsions de comptage correspondant aux événements de détection, des moyens (RAZ) de réinitialisation en continu **caractérisé en ce que** le circuit d'acquisition comporte en outré des moyens (SWT) pour réinitialiser de manière discontinue le circuit de traitement des signaux d'impulsions.

2. Dispositif selon la revendication 1, la courbe de réponse du nombre d'événements comptés en fonction du nombre de photons ou de particules captés par chaque élément de détection, est monotone croissante.

3. Dispositif selon la revendication précédente, dans lequel la courbe de réponse présente une première plage de réponse croissante de façon sensiblement linéaire, le nombre d'événements comptés augmentant proportionnellement au nombre de photons ou de particules captés, suivie d'une seconde plage de réponse simplement croissante, le nombre d'événements comptés continuant à augmenter ou restant stable tant qu'augmente le nombre de photons ou de particules captés.

4. Dispositif selon l'une des revendications précédentes, comprenant une entité de détection formée d'une pluralité de détecteurs élémentaires associés respectivement à une pluralité de circuits d'acquisition et de comptage d'événements formant une entité de traitement électronique disposée selon un agencement matriciel.

5. Dispositif selon l'une des revendications précédentes, les moyens (RAZ) de réinitialisation en continu déclenchant un courant de réinitialisation dans un étage d'accumulation de charge du circuit d'acquisition.

6. Dispositif selon l'une des revendications précédentes les moyens (SWT) pour réinitialiser de manière discontinue le circuit de traitement des signaux; d'impulsions déclenchant, après chaque événement de détection, rapidement ou après une phase de conversion de charge en impulsion, le retour à un point de repos de fonctionnement d'un étage d'amplification du circuit d'acquisition.

7. Dispositif selon l'une des revendications précédentes, les moyens (RAZ) de réinitialisation en continu déchargeant des moyens capacitifs (Cf) d'un étage d'accumulation de charge, en réponse à chaque événement détecté.

8. Dispositif selon la revendication précédente, comprenant des moyens pour abréger la décharge des moyens capacitifs.

9. Dispositif selon l'une des revendications précédentes, comprenant des moyens pour générer deux valeurs de courant de décharge dans un étage de conversion de charge.

10. Dispositif selon l'une des revendications précédentes, comprenant des moyens pour commuter la valeur du courant de décharge dans un étage amplificateur d'accumulation de charge.

11. Dispositif selon l'une des revendications 5 à 10, dans lequel le courant de décharge de l'étage d'accumulation de charge prend une première valeur durant les temps de repos et une seconde valeur lors de la détection, d'un événement, la seconde valeur étant supérieure à la première valeur.

12. Dispositif selon l'une des revendications précédentes, dans lequel un étage de conversion de charge comporte une source de courant de décharge continue et une source de courant de décharge déclenchée ou commutée.

13. Dispositif selon l'une des revendications précédentes, comprenant des moyens de commutation aptes à court-circuiter des moyens capacitifs d'un étage de conversion de charge.

14. Dispositif selon l'une des revendications précédentes, dans lequel le circuit d'acquisition comprend un étage d'accumulation de charge comprenant une source de courant et un commutateur reliés en parallèle à des bornes d'entrée et de sortie d'un amplificateur et/ou d'une capacité.

15. Dispositif selon l'une des revendications 11 à 14, dans lequel la valeur du courant de décharge de l'étage d'accumulation de charges durant les temps de repos est réglée à une valeur de l'ordre du courant parasite, de fuite ou d'obscurité de l'élément détecteur.

16. Dispositif selon l'une des revendications précédentes, dans lequel le circuit d'acquisition et de comptage comprend une boucle d'asservissement ou de rétroaction entre un point en ayal d'un étage d'accumulation de charge et ledit étage.

17. Dispositif selon la revendication précédente, dans lequel les moyens (RAZ) de réinitialisation en continu s'appliquent audit étage d'accumulation.

18. Dispositif selon la revendication 16 ou 17, dans lequel la boucle de commande d'asservissement retransmet des signaux d'impulsions de comptage.

19. Dispositif selon l'une des revendications 16 à 18, dans lequel la boucle d'asservissement transmet un signal issu d'un étage comparateur de seuil.

20. Dispositif selon l'une des revendications 16 à 19, dans lequel la boucle d'asservissement commande des moyens de commutation reliés à des bornes de l'étage d'accumulation de charge.

21. Dispositif selon l'une des revendications 16 à 20, dans lequel la boucle d'asservissement commande une source de courant de décharge.

22. Dispositif selon l'une des revendications précédentes, comprenant des moyens pour augmenter l'amplitude de montée d'un signal d'impulsions émis lors de chaque événement de détection associés à des moyens pour réduire le temps de descente dudit signal.

## Patentansprüche

1. Anordnung zur Messung von Strahlungsexpositionen, die Anordnung umfassend wenigstens ein Element zur Detektion von Photonen oder Teilchen, in Zuordnung zu wenigstens einer Schaltung zum Erfassen und Zählen von Detektionsereignissen, wobei die Erfassungsschaltung eine Schaltung zur Verarbeitung von Signalen umfasst unter Erzeugung von Zählimpulsen entsprechend den Detektionsereignissen, sowie Mittel (RAZ) zur kontinuierlichen Reinitialisierung bzw. Null-Rückstellung,
**dadurch gekennzeichnet, dass** die Erfassungsschaltung des Weiteren Mittel (SWT) zur diskontinuierlichen Reinitialisierung der Signalimpulse aufweist.

2. Anordnung nach Anspruch 1, bei welcher die Ansprechkurve der Anzahl gezählter Ereignisse in Abhängigkeit von der Anzahl erfasster bzw. eingefangener Photonen oder Teilchen jeweils pro jedes Detektionselement monoton ansteigend ist.

3. Anordnung nach dem vorhergehenden Anspruch, bei welcher die Ansprechkurve einen ersten im Wesentlichen linear ansteigenden Ansprechbereich aufweist, wobei die Anzahl gezählter Ereignisse proportional zur Zahl der erfassten bzw. eingefangenen Photonen oder Teilchen zunimmt, gefolgt von einem zweiten, einfach ansteigenden Ansprechbereich, wobei die Anzahl gezählter Ereignisse weiterhin ansteigt oder stabil bleibt, solange die Anzahl erfasster bzw. eingefangener Photonen oder Teilchen zunimmt.

4. Anordnung nach einem der vorhergehenden Ansprüche, die Anordnung umfassend eine Detektionseinheit bzw. -entität aus einer Mehr- bzw. Vielzahl von Elementar-Detektoren in Zuordnung jeweils zu einer Mehr- bzw. Vielzahl von Schaltungen zum Erfassen und zum Zählen von Ereignissen, in Ausbildung als eine Einheit bzw. Entität zur elektronischen Verarbeitung, in einer Matrixanordnung.

5. Anordnung nach einem der vorhergehenden Ansprüche, bei welcher die Mittel (RAZ) zur kontinuierlichen Reinitialisierung einen Reinitialisierungsstrom in einer Ladungs-Akkumulierungstufe der Erfassungsschaltung hervorrufen.

6. Anordnung nach einem der vorhergehenden Ansprüche, bei welcher die Mittel (SWT) zur diskontinuierlichen Reinitialisierung der Schaltung zur Verarbeitung der Signalimpulse jeweils nach jedem Detektionsereignis jeweils rasch oder nach einer Phase der Konversion bzw. Umwandlung von Ladung in Impuls die Rückkehr einer Verstärkerstufe der Erfassungsschaltung in einen Ruhepunkt des Betriebs auslösen.

7. Anordnung nach einem der vorhergehenden Ansprüche, bei welcher die Mittel (RAZ) zur kontinuierlichen Reinitialisierung kapazitive Mittel (Cf) einer Stufe für die Ladungsakkumulation jeweils als Ansprechfolge eines detektierten Ereignisses entladen.

8. Anordnung nach dem vorhergehenden Anspruch, welche Mittel zur Abkürzung der Entladung der kapazitiven Mittel umfasst.

9. Anordnung nach einem der vorhergehenden Ansprüche, welche Mittel zur Erzeugung von zwei Werten des Entladungsstroms in einer Verstärkerstufe zur Ladungsakkumulation aufweist.

10. Anordnung nach einem der vorhergehenden Ansprüche, welche Mittel zur Umschaltung des Betrags des Entladestroms in einer Verstärkerstufe zur Ladungsakkumulation umfasst.

11. Anordnung nach einem der Ansprüche 5 bis 10, in welcher die Entladungsstromquelle der Ladungsakkumulationsstufe einen ersten Wert während der Ruhezeit annimmt und einen zweiten Wert bei der Detektion eines Ereignisses, wobei der zweite Wert größer als der erste ist.

12. Anordnung nach einem der vorhergehenden Ansprüche, in welcher eine Stufe zur Ladungskonversion bzw. -umwandlung eine kontinuierliche Entladestromquelle und eine auslösbare bzw. umschaltbare Entladestromquelle umfasst.

13. Anordnung nach einem der vorhergehenden Ansprüche, welche Umschaltmittel aufweist, die kapazitive Mittel einer Ladungskonversions- bzw. -umwandlungsstufe kurzschließen können.

14. Anordnung nach einem der vorhergehenden Ansprüche, bei welcher die Erfassungsschaltung eine Stufe zur Ladungsakkumulation umfasst, welche eine Stromquelle und einen Kommutator bzw. Umschalter aufweist, die in Parallelschaltung zwischen den Eingangs- und Ausgangsanschlüssen eines Verstärkers oder einer Kapazität angeschlossen sind.

15. Anordnung nach einem der Ansprüche 11 bis 14, bei welcher der Betrag des Entladestroms der Ladungsakkumulationsstufe während der Ruhezeiten auf einen Wert in der Größenordnung des parasitären Stroms, des Leckstroms oder des Dunkelstroms des Detektorelements eingestellt ist.

16. Anordnung nach einem der vorhergehenden Ansprüche, in welcher die Erfassungs- und Zählschaltung eine Regel- bzw. Servoschleife bzw. -Rückführung zwischen einem Punkt stromabwärts einer Ladungsakkumulationsstufe und der genannten Stufe umfasst.

17. Anordnung nach dem vorhergehenden Anspruch, bei welcher die Mittel (RAZ) zur kontinuierlichen Reinitialisierung auf die genannte Akkumulationsstufe einwirken.

18. Anordnung nach Anspruch 16 oder 17, bei welcher die Regel- bzw. Servorückführschleife Zählimpulssignale rückführt.

19. Anordnung nach einem der Ansprüche 14 bis 18, bei welcher die Regel- bzw. Servorückführschleife ein Signal aus einer Schwellwert-Komparatorstufe rückführt.

20. Anordnung nach einem der Ansprüche 16 bis 19, bei welcher die Regel- bzw. Servorückführschleife Kommutator- bzw. Umschaltmittel steuert, die mit Anschlüssen der Ladungsakkumulationsstufe verbunden sind.

21. Anordnung nach einem der Ansprüche 16 bis 20, bei welcher die Regel- bzw. Servorückführschleife eine Entladestromquelle steuert.

22. Anordnung nach einem der vorhergehenden Ansprüche, welche Mittel zur Erhöhung der Anstiegsamplitude eines jeweils bei jedem Detektionsereignis emittierten Impulssignals aufweist in Zuordnung zu Mitteln zur Verringerung der Abstiegsdauer dieses Signals.

**Claims**

1. A device for measuring exposure to radiations comprising at least one component for detecting photons or particles, associated with at least one circuit for acquiring and counting detection events, the acquisition circuit including a signal processing circuit delivering count pulses corresponding to detection events, means (RAZ) for continuous resetting
**characterized in that** the acquisition circuit further includes means (SWT) for discontinuously resetting the pulse signal processing circuit.

2. The device according to claim 1, the response curve of the number of counted events versus the number of photons or particles sensed, by each detection component, being a monotonous increasing curve.

3. The device according to the preceding claim, wherein the response curve has a first response range which increases substantially linearly, the number of counted events increasing proportionally to the number of sensed photons or particles, followed by a second response range which is simply increasing, the number of counted events continuing to increase or remaining stable as long as the number of sensed photons or particles increases.

4. The device according to any of the preceding claims, comprising a detection entity formed with a plurality of elementary detectors respectively associated with a plurality of circuits for acquiring and counting events forming an electronic processing entity arranged according to a matrix layout.

5. The device according to any of the preceding claims, the continuous resetting means (RAZ) triggering a resetting current in a charge accumulation stage of the acquisition circuit.

6. The device according to any of the preceding claims, the means (SWT) for discontinuously resetting the pulse signal processing circuit, triggering after each detection event, rapidly or after a charge-to-pulse conversion phase, the return to an idle operating point of an amplification stage of the acquisition circuit.

7. The device according to any of the preceding claims, the continuous resetting means (RAZ) triggering capacitive means of a charge accumulation stage in response to each detected event.

8. The device according to the preceding claim, comprising means for shortening the discharge of the capacitive means.

9. The device according to any of the preceding claims, comprising means for generating two discharge current values in a charge conversion stage.

10. The device according to any of the preceding claims, comprising means for switching the discharge current value in a charge accumulation amplifier stage.

11. The device according to any of claims 5 to 10, wherein the discharge current of the charge accumulation stage assumes a first value during the idle times and a second value when detecting an event, the second value being larger than the first value.

12. The device according to any of the preceding claims, wherein a charge conversion stage includes a continuous discharge current source and a triggered or switched discharge current source.

13. The device according to any of the preceding claims, comprising switching means capable of short-circuiting capacitive means of a charge conversion stage.

14. The device according to any of the preceding claims, wherein the acquisition circuit comprises a charge accumulation stage comprising a current source and a switch connected in parallel to input and output terminals of an amplifier and/or a capacitance.

**15.** The device according to any of claims 11 to 14, wherein the value of the discharge current of the charge accumulation stage during the idle time is adjusted to a value of the order of the parasitic, leakage or darkness current of the detector component.

**16.** The device according to any of the preceding claims, wherein the acquisition and counting circuit comprises a feedback or counter-reaction loop between a point downstream from a charge accumulation stage and said stage.

**17.** The device according to the preceding claim, wherein the continuous resetting means (RAZ) are applied to said accumulation stage.

**18.** The device according to claim 16 or 17, wherein the feedback control loop retransmits signals of count pulses.

**19.** The device according to any of claims 16 to 18, wherein the feedback loop transmits a signal from a threshold comparator stage.

**20.** The device according to any of claims 16 to 19, wherein the feedback loop controls switching means connected to terminals of the charge accumulation stage.

**21.** The device according to any of claims 16 to 20, wherein the feedback loop controls a discharge current source.

**22.** The device according to any of the preceding claims, comprising means for increasing the rise amplitude of a pulse signal emitted during each detection event associated with means for reducing the fall time of said signal.

FIG. 1

FIG. 2

FIG. 3

FIG. 4

FIG. 5

Ncnt(unit.)(Nbr.Cnt.)

Nlin

Namb

1

0    Namb1  Nlin    Nmax    Nsat    Ndet(unit.)
                        Namb2       (Nbr.Part.
                                    /Det)

FIG. 6

Ncnt(unit.)(Nbr.Evnt.)

Nlmt

Nlin

β

C

α

1

0        Nlin           Nsat    Ndet(unit.)
                                (Nbr.Part.
                                /Det)

20

FIG. 7

FIG. 8

FIG. 9A

FIG. 9B

FIG. 9C

FIG. 9D

FIG. 9E

FIG. 9F

FIG. 10

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Z.Y. CHANG ; W.M.C SANSEN.** Low noise wide-band amplifiers in bipolar and CMOS technologies. Kluwer Academic Publishers, 1991